# EUROPÄISCHE PATENTSCHRIFT

(11) **EP 0 479 011 B1**
(45) Veröffentlichungstag und Bekanntmachung des Hinweises auf die Patenterteilung: **11.08.1993**
(21) Anmeldenummer: 91115618.0
(22) Anmeldetag: 14.09.1991
(51) Int. Cl.: B60K 11/04, F01P 5/06, F04D 29/64

(54) **Lüfterhaube zur Befestigung an dem Kühler einer Brennkraftmaschine**
Fan cover for fastening on the radiator of an internal combustion engine
Capot de ventilateur pour fixation sur le radiateur d'un moteur à combustion interne

(30) Priorität: 05.10.1990 DE 4031567
(43) Veröffentlichungstag der Anmeldung: 08.04.1992
(73) Patentinhaber: Behr GmbH & Co., D-70469 Stuttgart (DE)
(72) Erfinder: Kull, Reinhard, W-7140 Ludwigsburg (DE)
(74) Vertreter: Wilhelm, Hans-Herbert, Dr.-Ing.

(56) Entgegenhaltungen:
- DE-A- 3 304 297
- DE-A- 3 536 457
- FR-A- 2 336 653
- US-A- 3 938 587

## Beschreibung

Die Erfindung betrifft eine Lüfterhaube mit Lüfterzarge zur Befestigung an dem Kühler einer Brennkraftmaschine wobei die Lüfterzarge die Lüfterschaufeln eines mit der Brennkraftmaschine verbundenen Ventilators umgibt.

Aus der DE-A- 35 36 457 ist eine solche Lüfterhaube bekannt, die in besonders einfacher Weise durch einen Steck- und Rastvorgang am Kühler befestigt werden kann. Da die Befestigung am Kühler erfolgt, ist bei einer solchen Bauart eine einwandfreie Ausrichtung der Lüfterzarge in Bezug auf den Lüfter nicht ohne weiteres möglich, der fest am Motor angeordnet ist. Um die mittige Einstellung der Lüfterzarge zum Lüfter zu ermöglichen, wird daher bei anderen Bauarten die Hauptbefestigung der Lüfterhaube als eine kraftschlüssige Verbindung ausgelegt. Die Qualität der Zentrierung der Lüfterhaube zum Lüfter hängt dann aber von der Sorgfalt und dem Geschick des Monteurs ab.

Es ist auch bekannt (DE-C- 33 04 297), dem Lüfter eine gesonderte Einlaufdüse zuzuordnen, die aber ebenfalls fest am Motor angeordnet wird und zum Teil in die Lüfterhaube hereinreicht. Bei einer solchen Bauart muß eine elastische Lippendichtung zwischen der am Motor befestigten Einlaufdüse und der Zarge der Lüfterhaube vorgesehen werden. Ein kontinuierlicher und während des Betriebes gleichbleibender Verlauf der die Luft vom Kühler zum Lüfter führenden Lüfterhaubenwandung ist dadurch nicht erreichbar. Auch die Montage ist relativ aufwendig.

Der Erfindung liegt die Aufgabe zugrunde, eine Lüfterhaube der eingangs genannten Art so auszugestalten, daß trotz einer ausschließlich am Kühler erfolgenden Befestigung der Lüfterhaube und der Zarge eine einwandfreie Ausrichtung der Zarge zum Lüfter möglich ist.

Zur Lösung dieser Aufgabe wird bei einer Lüfterhaube der eingangs genannten Art vorgesehen, daß die Lüfterhaube und die Lüfterzarge als zwei getrennte Bauteile ausgebildet und jeweils mit Flächenbereichen versehen sind, die dem Flächenbereich des anderen Bauteiles zugeordnet und mit mehreren, rasterartig auf dem Flächenbereich verteilten Befestigungsteilen versehen sind, die auf die Befestigungsteile des anderen Bauteiles abgestimmt, gegeneinanderdrückbar und formschlüssig miteinander verbindbar sowie in dieser Lage sicherbar sind.

Durch diese Ausgestaltung kann die Lüfterzarge vor dem Einbau des Kühlers mit der daran befestigten Lüfterhaube zentrisch zum Lüfter ausgerichtet werden und nach dem Einbau des Kühlers mit der Lüfterhaube mit dieser durch axiales Andrücken verbunden werden. Toleranzunterschiede werden durch die rasterartige Anordnung der Befestigungsteile ausgeglichen. Die Lüfterzarge ist anschließend fest mit der Lüfterhaube und dem Kühler verbunden, so daß ein einheitlicher und durchgehender Luftleitkörper gebildet ist. Sie ist dennoch zentrisch zum Lüfter ausgerichtet, so daß optimale Strömungsverhältnisse erreicht werden können.

Vorteilhafte Weiterbildungen der Erfindung sind in den Unteransprüchen gekennzeichnet. Die Merkmale des Anspruches 2 stellen eine einfache Realisierungsmöglichkeit der rasterartigen Anordnung der Befestigungsteile dar. Die noppenartigen Zapfen lassen sich in beliebiger Zuordnung jeweils ineinanderdrücken, wobei ihr Durchmesser klein genug gestaltet werden kann, um auch nur geringe Abweichungen zwischen der zentrischen Ausrichtung und der Lüfterzarge und der fest am Kühler sitzenden Lüfterhaube ausgleichen zu können. Es hat sich gezeigt, daß Durchmesser der Zapfen in der Größenordnung von 1 bis 1,5 mm bei den meisten Ausführungsformen ausreichen, um einen geringen oder einen größeren Versatz zwischen Lüfterzarge und Lüfterhaube abhängig vom Rastermaß ausgleichen zu können.

Nach dem Anspruch 3 können die Zapfen sich zu ihrem freien Ende hin leicht konisch verjüngen, was das Einführen der freien Zapfenenden in die rasterartigen Zwischenräume erleichtert. Bei dieser Ausgestaltung ist es auch vorteilhaft, die Zapfen aus elastischem Material herzustellen, was bei einer Ausgestaltung der Lüfterhaube und der Lüfterzarge aus Kunststoff in einfacher Weise bei der Herstellung der Teile schon verwirklicht wird.

Nach Anspruch 5 ist es zur Sicherung der ineinandergefügten Flächenbereiche besonders vorteilhaft, einen Rastzapfen vorzusehen, der die ineinandergedrückte Lage der Flächenbereiche sichert. Dabei können nach Anspruch 6 in einfacher Weise die Öffnungen in den Flächenbereichen zur Aufnahme des Rastzapfens unterschiedliche Durchmesser aufweisen, wobei eine der Öffnungen nur dem Durchmesser des Rastzapfens entspricht und sein Einrasten ermöglicht, während die andere einen wesentlich größeren Durchmesser besitzt, um dadurch die Verstellmöglichkeit der beiden durch die Flächenbereiche aneinanderzufügenden Teile nicht zu hindern. In einfacher Weise kann der Rastzapfen nach Anspruch 7 mit einem umlaufenden Sicherungskragen versehen sein, dessen Durchmesser größer als die größere der Öffnungen in den Flächenbereichen ist, so daß er mit seinem einen Rastende in einen der beiden miteinander zu verbindenden Teile fest einrastet und den anderen Teil mit dem Sicherungskragen gegen den ersten Teil drückt.

Nach Anspruch 8 ist es vorteilhaft, diese Rastzapfen unverlierbar mit der Lüfterzarge zu verbinden, was bei der Herstellung der Teile aus Kunststoff durch einen entsprechenden Anspritzvorgang über ein Filmscharnier o.dgl. geschehen kann. Nach Anspruch 9 kann die Lüfterzarge zusätzlich mit nach der von der Lüfterhaube abgewandten Seite abstehenden Zentrierstegen versehen sein, die als Montagehilfen zur Zentrierung der Lüfterzarge am Lüfter dienen. Diese Montagehilfen können nach der Befestigung zwischen Lüfterhaube und Lüfterzarge abgebrochen werden.

Die erfindungsgemäße Ausgestaltung eignet sich besonders dann, wenn die Lüfterzarge als eine Einlaufdüse ausgebildet ist, bei der es in ganz besonderer Weise darauf ankommt, daß sie die Lüfterschaufeln mit gleichbleibendem Abstand ummantelt.

In der Zeichnung ist ein Ausführungsbeispiel der Erfindung dargestellt, das im folgenden erläutert wird. Es zeigen:
- Fig. 1: die Ansicht einer erfindungsgemäß ausgestalteten Lüfterhaube zur Befestigung am Kühler, die mit mehreren rasterartig ausgebildeten Flächenbereichen zum Anschluß einer Lüfterzarge versehen ist,
- Fig. 2: den Schnitt durch die Lüfterhaube der Fig. 1 längs der Schnittlinie II-II, um 90° gegenüber der Schnittanordnung der Fig. 1 gedreht,
- Fig. 3: die Ansicht einer Lüfterzarge mit einer Einlaufdüse, die an der Lüfterhaube der Fig. 1 anbringbar ist,
- Fig. 4: den Schnitt durch die Lüfterzarge der Fig. 3 längs der Linie IV-IV, ebenfalls in einer gegenüber der Schnittlinie in Fig. 3 um 90° gedrehten Darstellung,
- Fig. 5: die vergrößerte Teildarstellung eines der rasterartigen Flächenbereiche der Lüfterzarge nach Fig. 3,
- Fig. 6: die vergrößerte Detaildarstellung eines der rasterartigen Flächenbereiche der Lüfterhaube nach Fig. 1,
- Fig. 7: die vergrößerte Teildarstellung der Teilschnitte nach den Linien VII-VII durch die Flächenbereiche der Fig. 5 und 6 jeweils in der Lage der Flächenbereiche, in der sie gegeneinander zum Zweck der Verbindung drückbar sind,
- Fig. 8: die Schnittdarstellungen durch die Flächenbereiche der Fig. 5 und 6 in einer Anordnung ähnlich Fig. 7 zusätzlich mit einem als Rastzapfen ausgebildeten Befestigungselement und
- Fig. 9: die vergrößerte Darstellung einer Ansicht des Befestigungselementes der Fig. 8 von der Rastzapfenseite aus gesehen.

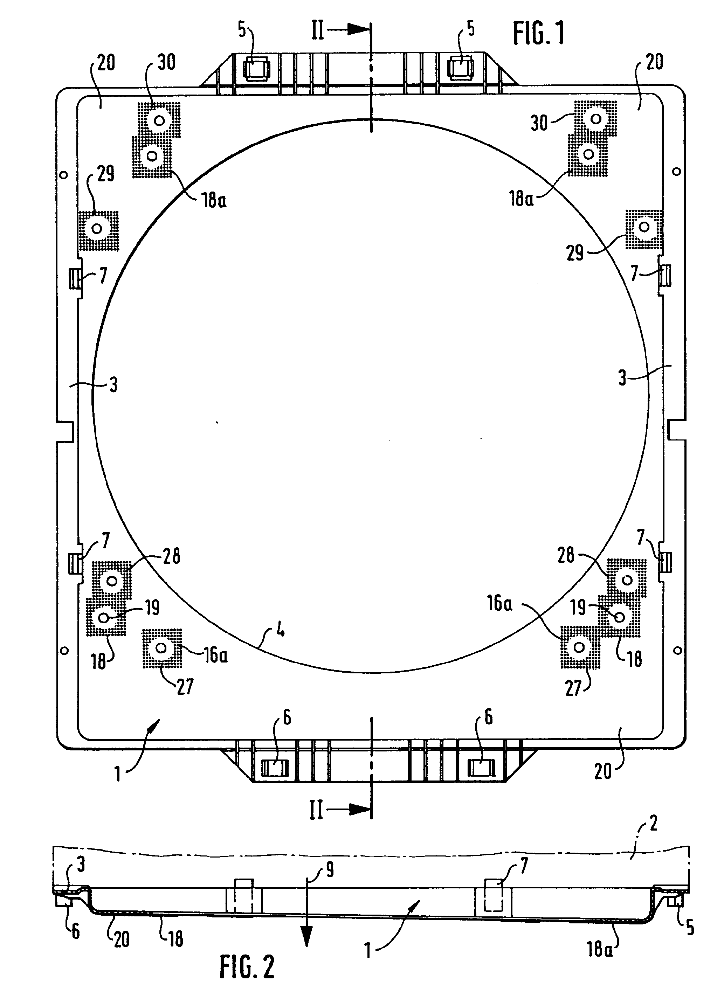

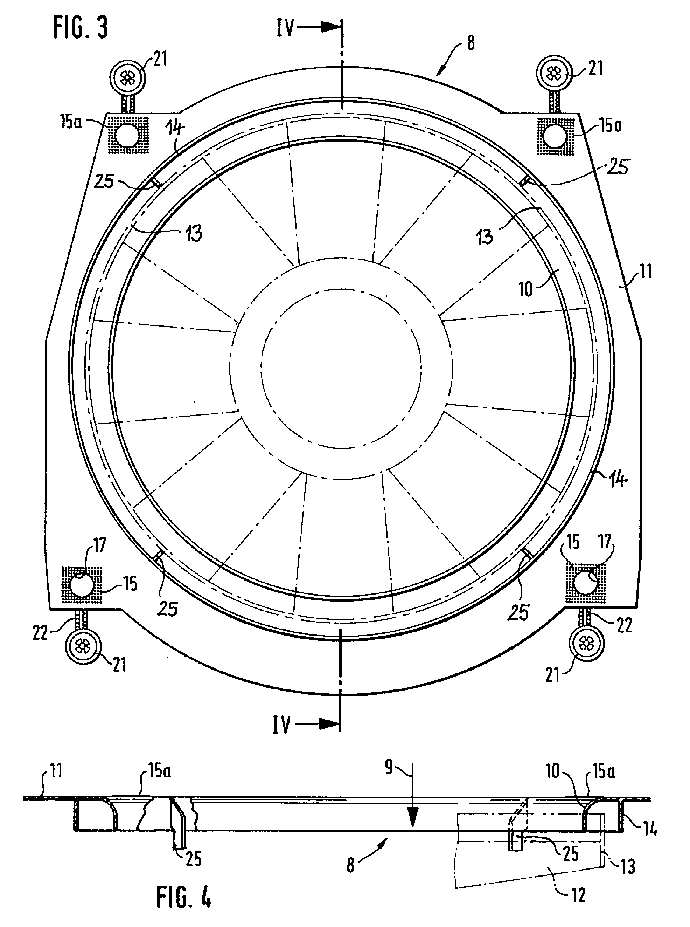

In den Fig. 1 und 2 ist eine Lüfterhaube (1) aus Kunststoff gezeigt, die im wesentlichen aus einem umlaufenden Rahmen (3) besteht, der eine kreisrunde Öffnung (4) umgibt. In bekannter Weise sind die Abmessungen dieser Lüfterhaube (1) den Abmessungen eines nur andeutungsweise in Fig. 2 gezeigten Kühlers (2) angepaßt und die Lüfterhaube (1) kann in ebenfalls bekannter Weise formschlüssig über Stecktaschen und Steckzapfen an entsprechenden Stellen der Wasserkästen des Kühlers fixiert und durch elastische Rasthaken (7) am Kühler gesichert werden. Die Befestigungsstellen sind dabei so ausgelegt, daß die Lüfterhaube (1) an den Stellen (5) sowohl in Längs- als auch in Querrichtung fest am oberen Wasserkasten des Kühlers gehalten wird, während die Befestigungsstellen (6) die Lüfterhaube (1) nur in der Querrichtung, also parallel zur Schnittlinie II-II, sichern, dagegen eine Relativbewegung zwischen dem unteren Wasserkasten des Kühlers und den Befestigungsstellen (6) in Richtung der Schnittlinie II zulassen. Dieser Längenausgleich wird im Hinblick auf die im Betrieb bedingten Wärmedehnungen des Kühlers gewählt. An dieser so formschlüssig, aber ohne Schrauben oder sonstige nur durch Werkzeuge betätigbare Befestigungsmittel am Kühler gehaltene Lüfterhaube (1) wird die in den Fig. 3 und 4 gezeigte Lüfterzarge (8) befestigt, die zunächst aber als ein getrenntes Bauteil, beim Ausführungsbeispiel ebenfalls aus Kunststoff hergestellt ist.

Die Lüfterzarge (8) der Fig. 3 und 4 ist als eine Einlaufdüse für die den Kühler im Sinn des Pfeiles (9) durchströmende Kühlluft ausgebildet, die in nicht näher darstellter, weil ebenfalls bekannter Weise, die Schaufeln des Lüfters außen zumindest teilweise umgibt. Die Lüfterzarge (8) besitzt zu diesem Zweck eine sich von dem umlaufenden Rand (11) aus in der Pfeilrichtung (9) einwölbende Wand, die eine Einlaufdüse (10) bildet, die beim Ausführungsbeispiel in den mit den gestrichelt angedeuteten Lüfterflügeln (12) fest umlaufenden Lüftermantelring (13) hereinragt, während ein Zargenteil (14) diesen Mantel (13) außen umgibt.

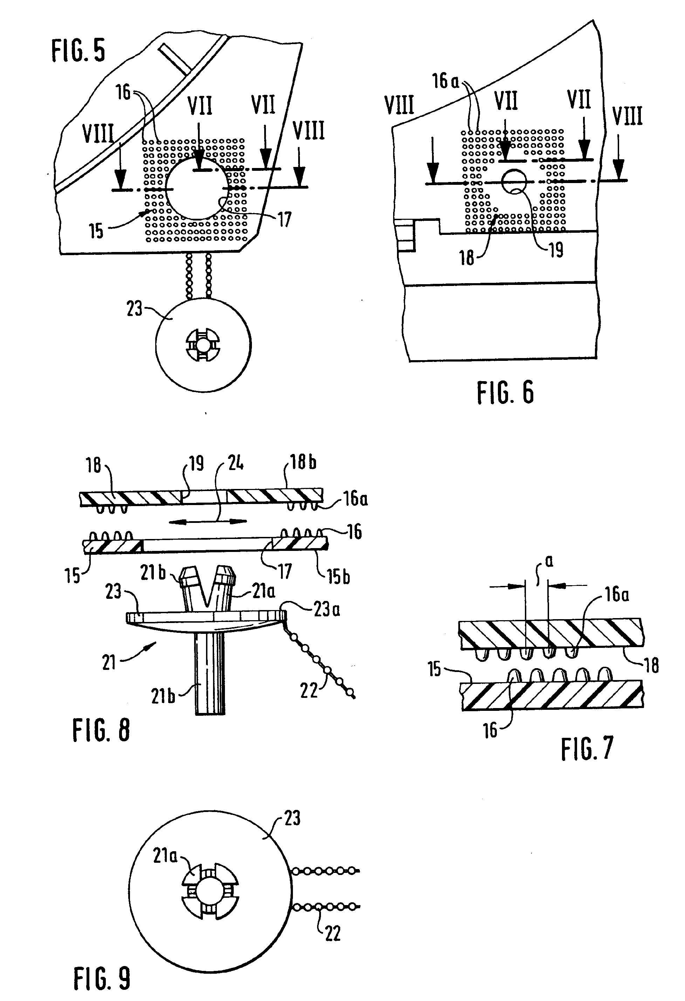

Der die Einlaufdüse (10) umgebende Rahmen (11) weist auf der später der Lüfterhaube (1) zugewandten Seite ebene Flächen in den vier Eckbereichen auf, wo jeweils Flächenbereiche (15a und 15) vorgesehen sind, die, wie noch anhand der Fig. 5 bis 8 erläutert werden wird, mit rasterartig angeordneten Befestigungsteilen (16) ausgerüstet sind, welche eine Öffnung (17) quadratförmig umgeben. Diesen Flächenbereichen (15a bzw. 15) zugeordnet sind Flächenbereiche (18a und 18) auf ebenfalls planen Flächenteilen (20) der Lüfterhaube (1), so daß dann, wenn die Lüfterzarge (8) mit ihren Flächenbereichen (15a und 15) gegen die Flächen (20) des Rahmens (3) der Lüfterhaube (1) gerichtet wird, die Flächenbereiche (15a) auf die Flächenbereiche (18a) der Lüfterhaube (1) und die Flächenbereiche (15) der Lüfterzarge (8) auf die Flächenbereiche (18) der Lüfterhaube (1) gelegt werden können. Durch Gegeneinanderdrücken dieser Flächenbereiche kann die Lüfterzarge (8) mit der Einlaufdüse (10) fest mit der fest am Kühler angeordneten Lüfterhaube (1) verbunden werden, was im einzelnen noch erläutert werden wird.

Die Flächenbereiche (18a und 18) der Lüfterhaube (1) sind ebenfalls mit rasterartig angeordneten Befestigungselementen (16) in der gleichen Art versehen, wie dies bei den Flächenbereichen (15a und 15) der Fall ist. Auch hier sind dieser rasterartig angeordneten Befestigungselemente (16a) im Quadrat angeordnet, dessen Seitenlänge der Seitenlänge der Quadrate der Flächenbereiche (15 und 15a) entspricht. Diese rasterartig ausgebildeten Flächenbereiche (18) allerdings umgeben eine Öffnung (19) (s. die Fig. 6 und 8), deren Durchmesser wesentlich kleiner ist als der Durchmesser der Öffnung (17) in den Flächenbereichen (15).

Wie den Fig. 7 und 8 zu entnehmen ist, sind die Befestigungselemente identisch ausgebildet und jeweils in der Form von noppenartigen Zapfen (16 und 16a) ausgebildet, die sich zu ihrem freien Ende hin leicht verjüngen. Diese einzelnen Zapfen (16a, 16) sind in den Flächenbereichen (15 und 18) jeweils in einem Abstand (a) zueinander angeordnet, der etwas mehr als das Doppelte des Durchmessers der Zapfen (16a und 16) im Bereich ihres freien Endes beträgt. Der Abstand (a) kann beispielsweise 2,5 mm betragen, wenn der Durchmesser im Bereich des freien Endes der Zapfen (16 und 16a) etwa 1 mm beträgt, während der Durchmesser am Fuß der sich leicht konisch zum Ende hin verjüngenden Zapfen (16a und 16) etwa 1,5 mm sein kann. Es bleibt dann zwischen benachbarten Zapfen (16a und 16) im Bereich des Fusses noch ein freier Raum von etwa 1 mm, wobei die Abmessungen so gewählt werden können, daß sich jeweils ein Zapfen (16a) fest in den Zwischenraum zwischen zwei Zapfen (16) der gegenüberliegenden Befestigungsfläche hereindrücken läßt.

Die Fig. 8 und 9 zeigen darüber hinaus die auch schon aus der Fig. 3 ersichtlichen Rastzapfen (21), die beim Ausführungsbeispiel jeweils einstückig mit der aus Kunststoff bestehenden Lüfterzarge (8) hergestellt und beispielsweise durch ein Filmscharnier (22) o.dgl. mit dem Rahmen (11) der Lüfterzarge (8) verbunden sind. Diese Rastzapfen (21) bestehen aus einem nach außen elastisch aufgespreizten Rastzapfenteil (21a), der nach hinten in einen Griffzapfen (21b) übergeht, der von Hand erfaßt werden kann. Zwischen dem Rastzapfenteil (21a) und dem Griffteil (21) ist ein umlaufender Kragen (23) in der Art einer Scheibe vorgesehen, der sich mit einer glatten und senkrecht zum Griffteil (21b) verlaufenden Fläche (23a) an der Rückseite (15b) der Flächenbereiche (15) anlegen läßt. Die Abmessungen des Rastzapfenteiles (21a) sind im übrigen so gewählt, daß der Rastzapfenteil (21a) sich in die Öffnung (19) der Flächenbereiche (18) hereindrücken läßt und dann durch radiales Aufspreizen mit dem Rand (21b) hinter der Öffnung (19) an der Fläche (18b) des Flächenbereiches (18) formschlüssig zur Anlage kommt. In dieser Lage drückt der umlaufende Kragen (23) gegen die Fläche (15b) des Flächenbereiches (15) und sichert so den formschlüssigen Eingriff der noppenartigen Zapfen (16 und 16a) ineinander. Wie Fig. 8 deutlich macht, ist es dabei durchaus möglich, daß die Flächenbereiche (15) und damit die Lüfterzarge (8) im Sinn der Pfeile (24) gegenüber den Flächenbereichen (18) verschoben werden, weil die Öffnung (17) einen Durchmesser aufweist, der größer als der Durchmesser der Öffnung (19) und größer als der Durchmesser des in der Öffnung (19) verrasteten Rastzapfens (21) ist. Die Lüfterzarge (8) läßt sich auf diese Weise daher formschlüssig und fest mit der Lüfterhaube (1) und damit mit dem Kühler verbinden, weist aber die Möglichkeit auf, vor einer endgültigen Verbindung mit der Lüfterhaube (1) sich noch quer zu dieser in gewissem Umfang verschieben zu lassen.

Bei der Montage der neuen Lüfterhaube wird daher so vorgegangen, daß die Lüfterzarge (8), wie aus Fig. 4 andeutungsweise hervorgeht, zunächst mit Hilfe von Zentrierstegen (25), die auf der der Lüfterhaube (1) abgewandten Seite von der Lüfterzarge (8) vorstehen, zentrisch zum Lüfter und dessen Flügel (12) bzw. Mantel (13) ausgerichtet wird. Dies kann beispielsweise dadurch geschehen, daß die Zentrierstege (25) in den Zwischenraum zwischen dem Zargenteil (14) und dem Lüftermantelring (13) eingreifen. Nachdem die Lüfterzarge (8) auf diese Weise zentrisch zum Lüfter ausgerichtet und vorläufig dort gehalten ist, wird der Kühler mit der an ihm bereits fest angeordneten Lüfterhaube (1) eingesetzt und an den dazu vorgesehenen Stellen eines Fahrzeuges befestigt. Ist dies geschehen, so kann die Lüfterzarge (8) aus ihrer zentrierten Lage am Lüfter (12) heraus gegen die Anlageflächen der Lüfterhaube (8) gedrückt werden, wobei die Flächenbereiche (15a und 18a) einerseits und die Flächenbereiche (15 und 18) andererseits gegenseitig zur Anlage kommen und die noppenartigen Zapfen (16a und 16), wie in Fig. 7 angedeutet, formschlüssig ineinandergreifen. Die Lüfterzarge (8) kann daher formschlüssig und fest nach dem Einsetzen des Rastzapfens (21) an der Lüfterhaube (8) befestigt werden, und zwar unabhängig davon, ob die Lüfterhaube (1) selbst ebenfalls schon exakt zentrisch zum Lüfter ausgerichtet ist oder nicht. Bekanntlich ist der Lüfter fest am Motor angebracht, während der Kühler unabhängig davon am Fahrzeug selbst befestigt wird. Unvermeidliche Toleranzen führen in diesem Fall dazu, daß ein gewisser Versatz zwischen Lüfter oder Lüfterummantelung und der mit dem Kühler versehenen Lüfterhaube auftritt. Ein solcher Versatz läßt sich durch die erfindungsgemäße Ausgestaltung ohne weiteres ausgleichen. Bei der Ausgestaltung mit den vorher erwähnten Abmessungen der noppenartigen Zapfen (16a und 16) und deren Rasteranordnung lassen sich bis zu 7,5 mm, bei anderer Anordnung auch noch mehr, an seitlichem Versatz ausgleichen. Die Erfindung ermöglicht daher eine feste Verbindung zwischen Lüfterzarge oder Einlaufdüse mit dem Kühler bei gleichzeitiger zentrischer Anordnung der Lüfterzarge oder Einlaufdüse zum Lüfter. Ist die Lüfterzarge (8) bzw. die Einlaufdüse (10) auf diese Weise fest mit der Lüfterhaube (1) verbunden, können die Montagehilfen (die Arme 25) an den dafür vorgesehenen Sollbruchstellen (25a) abgebrochen werden.

In der Fig. 1 sind an der Lüfterhaube (1) noch mehrere Flächenbereiche (27, 28, 29 und 30) vorgesehen, die zur Befestigung anderer Lüfterzargen mit anderen Abmessungen dienen. Diese Ausgestaltung weist den großen Vorteil auf, daß sich verschiedene Lüfterzargen oder Einlaufdüsen mit ein und derselben Lüfterhaube (1) verbinden lassen. Neben der einfacheren Handhabung bei der Montage, der sicheren Befestigung der Lüfterzarge an dem Kühler und einer einfacheren Reparaturmöglichkeit - die Rastzapfen (21) lassen sich im Bedarfsfall auch wieder lösen - wird durch die erfindungsgemäße Ausgestaltung daher auch der Vorteil erreicht, daß eine einzige Lüfterhaubenausführung mit mehreren verschiedenen Zargen oder Düsen kombinierbar ist, was eine Vereinfachung in der Teileherstellung und Lagerhaltung derselben ermöglicht.

## Patentansprüche

1. Lüfterhaube mit Lüfterzarge zur Befestigung an dem Kühler einer Brennkraftmaschine wobei die Lüfterzarge die Lüfterschaufeln eines mit der Brennkraftmaschine verbundenen Ventilators umgibt, dadurch gekennzeichnet, daß die Lüfterhaube (1) und die Lüfterzarge (8) als zwei getrennte Bauteile ausgebildet und jeweils mit Flächenbereichen (15, 15a, 18, 18a) versehen sind, die dem Flächenbereich des anderen Bauteiles zugeordnet und mit mehreren rasterartig auf dem Flächenbereich (15, 15a, 18, 18a) verteilten Befestigungsteilen (16a, 16) versehen sind, die auf die Befestigungsteile des anderen Bauteiles abgestimmt, gegeneinanderdrückbar und formschlüssig miteinander verbindbar, sowie in dieser Lage sicherbar sind.

2. Lüfterhaube nach Anspruch 1, dadurch gekennzeichnet, daß die Befestigungsteile als abstehende, noppenartige Zapfen (16, 16a) ausgebildet sind, die in einem Abstand (a) zueinander angeordnet sind, der ihrem Durchmesser in etwa entspricht.

3. Lüfterhaube nach Anspruch 2, dadurch gekennzeichnet, daß die Zapfen (16a, 16) sich zu ihrem freien Ende hin konisch verjüngend ausgebildet sind.

4. Lüfterhaube nach Anspruch 3, dadurch gekennzeichnet, daß die Zapfen aus einem elastischen Material, insbesondere aus Kunststoff bestehen.

5. Lüfterhaube nach Anspruch 1, dadurch gekennzeichnet, daß zur Sicherung der Befestigungsteile (16a, 16) ineinander ein beide Flächenbereiche (15, 18 bzw. 15a, 18a) durchsetzender Rastzapfen (21) vorgesehen ist.

6. Lüfterhaube nach Anspruch 5, dadurch gekennzeichnet, daß die Öffnungen (17, 19) in den Flächenbereichen (15 bzw. 18) zur Aufnahme des Rastzapfens (21) unterschiedliche Durchmesser aufweisen, daß eine der Öffnungen (19) dem Durchmesser des Rastzapfens (21a) entspricht, während die andere (17) einen wesentlich größeren Durchmesser besitzt.

7. Lüfterhaube nach Anspruch 6, dadurch gekennzeichnet, daß der Rastzapfen (21) mit einem umlaufenden Sicherungskragen (23) versehen ist, dessen Durchmesser größer als der Durchmesser der größeren Öffnung (17) in den Flächenbereichen (15) ist.

8. Lüfterhaube nach Anspruch 7, dadurch gekennzeichnet, daß die größere Öffnung (17) den Flächenbereichen (15, 15a) der Lüfterzarge (8) zugeordnet ist und daß an dieser Lüfterzarge (8) unverlierbar auch die Rastzapfen (21) angebracht sind.

9. Lüfterhaube nach Anspruch 1, dadurch gekennzeichnet, daß die Lüfterzarge (8) zusätzlich mit nach der von der Lüfterhaube (1) abgewandten Seite abstehenden Zentrierstegen (25) zur Zentrierung am Lüfter (12) versehen ist.

10. Lüfterhaube nach einem der Ansprüche 1 bis 9, dadurch gekennzeichnet, daß die Lüfterzarge (8) in der Art einer Einlaufdüse (10) ausgebildet ist.

## Claims

1. Fan cover with fan body for fastening on the radiator of an internal combustion engine, the fan body enclosing the fan blades of a fan that is connected to the internal combustion engine, **wherein** the fan cover (1) and the fan body (8) are designed as two separate components and are provided each with surface areas (15, 15a, 18, 18a) which correspond to the respective surface area of the other component and are provided with a plurality of mounting elements (16a, 16) distributed over the said surface area (15, 15a, 18, 18a) in sort of a grid pattern, the mounting elements (16a, 16) of one component being adapted to the mounting elements of the respective other component so that they can be pressed into engagement and can be captively connected one with the other and secured in that condition.

2. Fan cover according to claim 1, wherein the mounting elements are configured as projecting, knub-like lugs (16, 16a) which are mutually spaced by a distance (a) corresponding approximately to their diameter.

3. Fan cover according to claim 2, wherein the lugs (16a, 16) taper conically toward their free ends.

4. Fan cover according to claim 3, wherein the lugs consist of an elastic material, especially a plastic material.

5. Fan cover according to claim 1, wherein for securing the mounting elements (16a, 16) one in the other, a locking bolt (21) is provided which passes through both surface areas (15, 18 or 15a, 18a).

6. Fan cover according to claim 5, wherein the openings (17, 19) in the surface areas (15 or 18) for receiving the locking bolt (21) have different diameters and one of the openings (19) corresponds to the diameter of the locking bolt (21a) while the other one (17) has a substantially larger diameter.

7. Fan cover according to claim 6, wherein the locking bolt (21) is provided with a continuous peripheral securing collar (23) having a diameter larger than the diameter of the largest opening (17) in the surface areas (15).

8. Fan cover according to claim 7, wherein the largest opening (17) is assigned to the surface areas (15, 15a) of the fan body (8) and the locking bolts (21) are mounted undetachably on the same fan body.

9. Fan cover according to claim 1, wherein the fan body (8) is additionally provided with centering webs (25) projecting to the side opposite the fan cover (1), for centering the fan (12).

10. Fan cover according to any of claims 1 to 9, wherein the fan body (8) is designed in the manner of an air inlet (10).

## Revendications

1. Capot de ventilateur avec châssis de ventilateur, pour fixation sur le radiateur d'un moteur à combustion interne, le châssis de ventilateur entourant les pales d'un ventilateur relié au moteur à combustion interne, caractérisé en ce que le capot de ventilateur (1) et le châssis de ventilateur (8) sont réalisés sous forme d'éléments de construction séparés et pourvus chacun de zones de surface (15, 15a, 18, 18a), associées à la zone de surface de l'autre élément de construction et pourvus de plusieurs parties de fixation (16a, 16) réparties de façon tramée sur la zone de surface (15, 15a, 18, 18a), conçues pour correspondre aux éléments de fixation de l'autre élément de construction, susceptibles d'être pressées les unes contre les autres et reliées ensemble par liaison de forme, ainsi que fixées dans cette position

2. Capot de ventilateur selon la revendication 1, caractérisé en ce que les éléments de fixation sont réalisés sous forme d'appendices (16a, 16) en forme de bouton, faisant saillie, disposés les uns par rapport aux autres à une distance (a) correspondant à peu près à leur diamètre.

3. Capot de ventilateur selon la revendication 2, caractérisé en ce que les appendices (16, 16a) sont réalisés en s'effilant de façon conique vers leur extrémité libre.

4. Capot de ventilateur selon la revendication 3, caractérisé en ce que les appendices sont composés d'un matériau élastique, en particulier d'un matériau synthétique.

5. Capot de ventilateur selon la revendication 1, caractérisé en ce qu'un appendice d'encliquetage (21) traversant les deux zones de surface (15, 18 respectivement 15a, 18a) est prévu en vue d'assurer la fixation des éléments de fixation (16, 16a) l'un dans l'autre.

6. Capot de ventilateur selon la revendication 5, caractérisé en ce que les ouvertures (17, 19) présentent dans les zones de surface (15 respectivement 18) des diamètres différents en vue de recevoir l'appendice d'encliquetage (21), en ce que l'une des ouvertures (19) correspond au diamètre de l'appendice d'encliquetage (21), tandis que l'autre (17) présente un diamètre notablement plus grand.

7. Capot de ventilateur selon la revendication 6, caractérisé en ce que l'appendice d'encliquetage (21) est pourvu d'une collerette de fixation (23) circulaire, dont le diamètre est supérieur à celui de la grande ouverture (17) ménagée dans les zones de surface (15).

8. Capot de ventilateur selon la revendication 7, caractérisé en ce que la grande ouverture (17) est associée aux zones de surface (15, 15a) du châssis de ventilateur (8) et en ce que les appendices d'encliquetage (21) sont également montés de façon imperdable sur ce châssis de ventilateur (8).

9. Capot de ventilateur selon la revendication 1, caractérisé en ce que le châssis de ventilateur (8) est pourvu en plus de nervures de centrage (25) faisant saillie depuis la face opposée au capot de ventilateur (1), en vue d'assurer le centrage sur le ventilateur (12).

10. Capot de ventilateur selon l'une des revendications 1 à 9, caractérisé en ce que le châssis de ventilateur (8) est réalisé à la façon d'une tuyère d'admission (10).
